# EUROPEAN PATENT APPLICATION

(11) **EP 0 655 862 A2**
(43) Date of publication of application: **31.05.1995**
(21) Application number: 94118408.7
(22) Date of filing: 23.11.1994
(51) Int. Cl.: H04N 5/44, H04N 11/00, H04N 5/21

(54) **Signal processing apparatus and method for wide-screen television system**

(30) Priority: 26.11.1993 JP 296747/93
(71) Applicant: MATSUSHITA ELECTRIC INDUSTRIAL CO., LTD., Kadoma-shi, Osaka-fu, 571 (JP)
(72) Inventor: Hayashi, Kenichiro, Katano-shi, Osaka (JP); Kageyama, Sadashi, Sanda-shi, Hyogo-ken (JP); Handa, Kouji, Osaka-shi, Osaka (JP); Uwabata, Hideyo, Hirakata-shi, Osaka (JP); Kisoda, Akira, Moriguchi-shi, Osaka (JP); Hayashi, Takaya, Nagaokakyo-shi, Kyoto (JP); Ogata, Yasuyo, Ibaraki-shi, Osaka (JP); Yasumoto, Yoshio, Nara-shi, Nara-ken (JP)
(74) Representative: Kügele, Bernhard

(57) **Abstract**

The television signal processing apparatus receives a video signal including a main signal (y,c) and a helper signal (VT,VH,AH), and produces a signal for display based on the main signal and the helper signal, the main signal being arranged in a predetermined portion of the screen having a first aspect ratio and representing a picture having a second aspect ratio, and the helper signal being used for improving the quality of picture of the main signal. The television signal processing apparatus includes: a noise/ghost detection circuit for detecting the level of at least one of noise and ghost included in the video signal, and for producing at least one control signal (ki) based on the detected level; a first signal processing circuit for receiving the main signal and for producing a first reproduction signal by processing the main signal; a second signal processing circuit for receiving the main signal and the helper signal, and for producing a second reproduction signal by processing the main signal and the helper signal; a mixing circuit (113) for receiving the control signal and the first and second reproduction signals, and for adding the first and second reproduction signal with respective weights in accordance with the control signal; and a circuit for converting an output signal of the mixing circuit into the signal for display. If the video signal includes noise and/or ghost, the image quality is prevented from being degraded due to the addition of the helper signal.

## Description

### BACKGROUND OF THE INVENTION

### 1. Field of the Invention:

The present invention relates to a television-signal processing apparatus in accordance with standards for a wide-screen television system, and a television-signal processing method used in the apparatus. More particularly, the present invention relates to a television-signal processing apparatus which is capable of processing wide-screen pictures of high quality with an aspect ratio which is wider than 4:3, while maintaining the compatibility with the conventional television system using the current standards of an aspect ratio of 4:3 (= 1.33), and a television-signal processing method used in the apparatus.

### 2. Description of the Related Art:

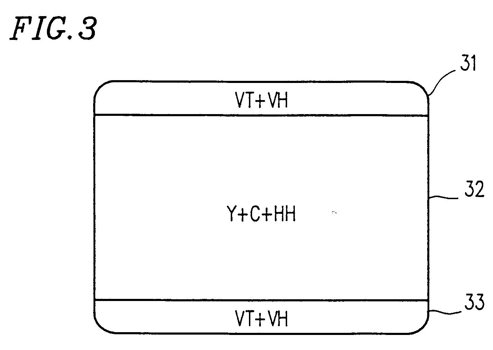

In recent years, studies have been conducted on a wide-screen television broadcasting system such as a second-generation enhanced television system (hereinafter referred to as "EDTV2"), which is compatible with the current standards of conventional television broadcasting system. A letter-box method is adopted as a method for transmitting video signals in EDTV2 so that wide-screen (wide aspect ratio) motion pictures in EDTV2 broadcasting can be adapted to the television standard of 1.33. In the letter-box method, scanning lines in a center portion excluding the upper and lower portions of a screen frame are used for transmitting a picture with an aspect ratio of 16:9 as a main signal (hereinafter, the center portion is referred to as a main panel). At this time, no pictures are displayed in the upper and lower portions of a screen with an aspect ratio of 4:3 (hereinafter, the upper and lower portions are referred to as upper and lower panels, respectively). As shown in Figure **3**, in the screen of a television receiver, upper and lower panels **31** and **33** are displayed as black bars, and a main panel **32** is displayed as a wide picture with a large aspect ratio in the center portion of the screen.

It has been proposed that helper signals for improving the image quality displayed on the receiver are transmitted by using the upper and lower panels. In addition, in EDTV2, it is proposed that a helper signal is transmitted through a 3-dimensional conjugate area (a Fukinuki hole) of a chrominance signal. For example, a vertical-temporal frequency high signal (a VT signal), a vertical frequency high signal (a VH signal), and a horizontal frequency high signal (an HH signal) may function as such a helper signal. The receiver can obtain a picture of high image quality by adding these helper signals to the main signal (for example, see ITE Technical Report Vol. 17, No. 65, PP. 19-24, BCS' 93-42, (Oct. 1993) and ITE Technical Report Vol. 17, No. 65, PP. 25-30, BCS' 93-43, (Oct. 1993)).

Hereinafter, the construction and the operation of a conventional television-signal processing apparatus will be described.

As is shown in Figure **3**, in the case of the letter-box method, in the main panel **32**, a horizontal frequency low component (a YL signal) of a luminance signal, and a chrominance signal (a C signal) included in the video signal are modulated and transmitted as a C' signal. At the same time, the above-mentioned HH signal is modulated and transmitted as an HH' signal through a Fukinuki hole. In addition, the signal obtained by modulating the VH signal in the vertical-temporal frequency domain (a VH' signal) is multiplexed on the VT signal, and compressed together to be 1/3 times along the horizontal axis. Then, the compressed signals are transmitted by the upper and lower panels **31** and **33**.

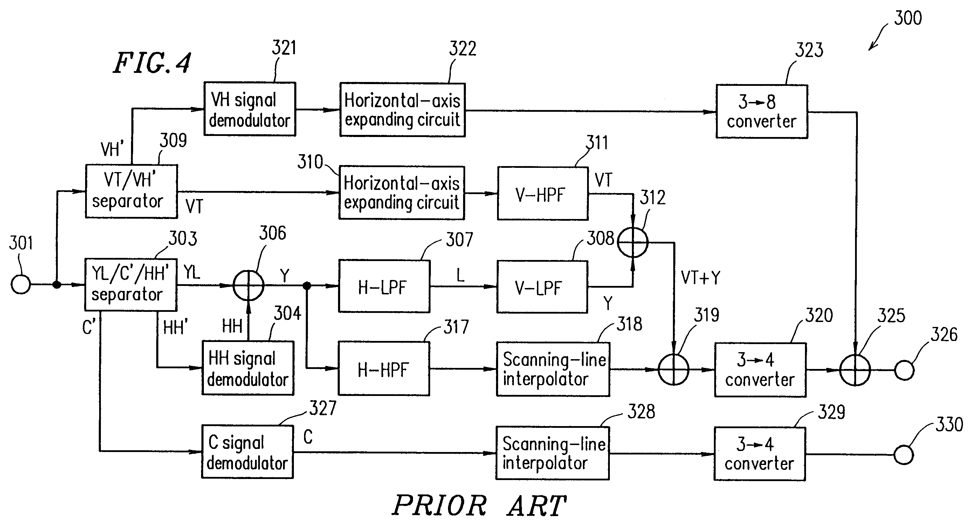

Figure **4** shows the construction of a conventional television-signal processing apparatus **300**. The television-signal processing apparatus **300** receives transmitted interlaced-scan signals, and converts them into progressive-scan signals for display. As is shown in Figure **4**, a YL/C'/HH'separator **303** separates the signal corresponding to the main panel **32** of the wide-screen television signal input through an input terminal **301**, into a luminance component signal **YL**, a modulated chrominance component signal **C'**, and a modulated horizontal frequency high signal **HH'**. An HH signal demodulator **304** demodulates the signal **HH'** output from the YL/C'/HH' separator **303**, and outputs a signal **HH**. An adder **306** adds the signal **YL** output from the YL/C'/HH' separator **303** to the signal **HH** output from the HH signal demodulator **304**, and outputs a luminance signal **Y** with an extended horizontal frequency band.

A horizontal low-pass filter (H-LPF) **307** extracts lower-frequency components which are lower than the horizontal frequency band of the transmitted VT signal from the signal **Y** output from the adder **306**, and outputs the extracted lower-frequency components. A horizontal high-pass filter (H-HPF) **317** extracts higher-frequency components which are higher than the horizontal frequency band of the transmitted VT signal from the signal **Y** output from the adder **306**, and outputs the extracted higher-frequency components. The scanning-line interpolator **318** interpolates a horizontal frequency high component of the signal **Y** output from the H-HPF **317** by selecting a processing manner (intra-field or inter-field) based on the motion of the picture, and converts the interlaced-scan signals into progressive-scan signals which are in turn output therefrom.

A VT/VH' separator **309** separates the signals corresponding to the upper and lower panels **31** and **33** of the wide-screen television signal input through the input terminal **301**, into a signal **VT** and a signal **VH'**. The VH signal demodulator **321** demodulates the signal **VH'** output from the VT/VH' separator **309**, and outputs a signal **VH**. A horizontal-axis expander (expanding circuit) **310** expands the signal **VT** output from the VT/VH' separator **309** to be 3 times along the horizontal axis. A horizontal-axis expander (expanding circuit) **322** expands the signal **VH** output from the VH signal demodulator **321** to be 3 times along the horizontal axis.

A vertical high-pass filter (V-HPF) **311** virtually inserts zero into the signal **VT** output from the horizontal-axis expander **310**, and then extracts vertical frequency high components. Then, the V-HPF **311** converts interlaced-scan signals into progressive-scan signals which are in turn output therefrom. A vertical low-pass filter (V-LPF) **308** virtually inserts zero into the horizontal frequency low components of the signal **Y** output from the H-LPF **307**, and then extracts vertical frequency low components. Then, the V-LPF **308** converts the interlaced-scan signals into progressive-scan signals which are in turn output therefrom. An adder **312** adds the signal **VT** output from the V-HPF **311** to the signal **Y** output from the V-LPF **308**, and outputs the resultant signal. Accordingly, as for the horizontal frequency low components, it is possible to obtain progressive-scan signals from which the aliasing caused by the interlaced scan of transmission signal is removed. An adder **319** adds the signals output from the adder **312** and the scanning-line interpolator **318**, and outputs the resultant signal.

The output signals from the adder **319** and the horizontal-axis expander **322** are converted by corresponding converters **320** and **323**, respectively, and then output.

The signal **C'** output from the YL/C'/HH' separator **303** is demodulated by a C signal demodulator **327**, converted by a converter **329**, and output through an output terminal **330**.

However, noises and ghosts may often be attached to the video signals when they are transmitted through the transmission path. Therefore, according to the above-described method, in addition to the noises and ghosts included in the main signal itself, noises and ghosts included in the helper signal transmitted by the upper and lower panels and Fukinuki holes are also added to the reproduced television signal. Thus, the use of a helper signal adversely affects the image quality of the television signal. Moreover, the ghosts added to the VT signal and VH signal are added to the main signal after being expanded to be 3 times, since the VT signal and VH signal are transmitted by the upper and lower panels after they have been compressed to be 1/3 times and then expanded to be 3 times before adding the main signal. Thus, the quality of the displayed picture is considerably deteriorated.

### SUMMARY OF THE INVENTION

The television signal processing apparatus of this invention receives a video signal including: a main signal and a helper signal, and produces a signal for display based on the main signal and the helper signal, the main signal being arranged in a predetermined portion of a screen having a first aspect ratio and representing a picture having a second aspect ratio, the helper signal being used for improving a quality of picture of the main signal. The television signal processing apparatus includes: noise/ghost detection means for detecting a level of at least one of noise and ghost included in the video signal, and for producing at least one control signal based on the detected level; first signal processing means for receiving the main signal and for producing a first reproduction signal by processing the main signal; second signal processing means for receiving the main signal and the helper signal, and for producing a second reproduction signal by processing the main signal and the helper signal; mixing means for receiving the control signal and the first and second reproduction signals, and for adding the first and second reproduction signal with respective weights in accordance with the control signal; and means for converting an output signal of the mixing means into the signal for display.

In one embodiment of the invention, the television signal processing apparatus further includes: amplitude control means for receiving the helper signal, for changing an amplitude of the helper signal in accordance with the control signal, and for outputting the helper signal having the changed amplitude; and adding means for adding the helper signal output from the amplitude control means to the output of the mixing means.

In another embodiment of the invention, the video signal includes a second helper signal which is multiplexed on the main signal, and the apparatus further includes: means for separating and extracting the main signal and the second helper signal and for outputting the extracted signals; second amplitude control means for changing an amplitude of the extracted second helper signal in accordance with the control signal and for outputting the second helper signal having the changed amplitude; and second adding means for adding the extracted main signal and the output signal from the second amplitude control means so as to produce an added signal, and for applying the added signal to the first and the second signal processing means as the main signal.

In another embodiment of the invention, the video signal is transmitted as an interlaced-scan signal; the first and the second signal processing means each has a scanning-line interpolation circuit; and the first and the second reproduction signals are output from the first and the second signal processing means as progressive-scan signals.

According to another aspect of the invention, a television signal processing method is provided. The television signal processing method includes the steps of receiving a video signal including a main signal and a helper signal and producing a signal for display based on the main signal, the main signal being arranged in a predetermined portion of a screen having a first aspect ratio and representing a picture having a second aspect ratio, and the helper signal being used for improving a quality of picture of the main signal. The television signal processing method further includes the steps of: detecting a level of at least one of noise and ghost included in the video signal, and producing at least one control signal based on the detected level; processing the main signal to produce a first reproduction signal; processing both the main signal and the helper signal to produce a second reproduction signal; producing a mixed signal by adding the first and second reproduction signal with respective weights in accordance with the control signal; and converting the mixed signal into the signal for display.

In one embodiment of the invention, the television signal processing method further includes the steps of: changing an amplitude of the helper signal in accordance with the control signal; and adding the helper signal having the changed amplitude to the mixed signal.

In another embodiment of the invention, the video signal includes a second helper signal which is multiplexed on the main signal, and the method further includes the steps of: separating and extracting the main signal and the second helper signal and outputting the extracted signals; changing an amplitude of the extracted second helper signal in accordance with the control signal; and producing an added signal by adding the extracted main signal and the second helper signal having the changed amplitude, and applying the added signal as the main signal for the first and the second signal processing steps.

In another embodiment of the invention, the video signal is transmitted as an interlaced-scan signal; the step of processing the main signal comprises the steps of performing a scanning-line interpolation and converting the first reproduction signal into a progressive-scan signal; and the step of processing both the main signal and the helper signal comprises the steps of performing a scanning-line interpolation and converting the second reproduction signal into a progressive-scan signal.

In another embodiment of the invention, the at least one control signal is at least one coefficient k which is set depending on the detected level, k being 0 ≦ k ≦ 1.

In another embodiment of the invention, the helper signal is a vertical-temporal frequency high signal.

In another embodiment of the invention, the helper signal is a vertical frequency high signal.

In another embodiment of the invention, the second helper signal is a horizontal frequency high signal.

In another embodiment of the invention, the first aspect ratio is 4:3, the second aspect ratio is 16:9, and the predetermined portion of the screen is a center portion of the screen.

Thus, the invention described herein makes possible the advantages of (1) providing a television signal processing apparatus and a method used in the apparatus in which, when any noise and ghost is added on the way through the transmission path, the amplitudes of the helper signals to be added to the main signal are controlled depending on the level of the noise and ghost, whereby it is possible to prevent these helper signals from causing the image quality to be degraded, and (2) providing a television signal processing apparatus and a method used in the apparatus in which, when any noise and ghost is added on the way through the transmission path, a video signal for display that is reproduced with use of the helper signal and a video signal for display that is reproduced without use of the helper signal are added with respective weights depending on the level of the noise and ghost, whereby it is possible to prevent the helper signal from causing the image quality to degrade.

These and other advantages of the present invention will become apparent to those skilled in the art upon reading and understanding the following detailed description with reference to the accompanying figures.

### BRIEF DESCRIPTION OF THE DRAWINGS

Figure **1** is a block diagram showing the construction of a television signal processing apparatus in Example 1 of the invention.
Figure **2** is a block diagram showing the construction of a television signal processing apparatus in Example 2 of the invention.
Figure **3** is a schematic diagram showing an exemplary signal arrangement of a wide-screen television system used in this invention.
Figure **4** is a block diagram showing the construction of a conventional television signal processing apparatus.

### DESCRIPTION OF THE PREFERRED EMBODIMENTS

First, as an exemplary signal arrangement of a wide-screen television system used in this invention, a letter-box type signal arrangement will be described. In the following description of examples of the invention, as shown in Figure **3**, signals which are obtained by multiplexing a signal **VT** and a signal **VH** in the frequency domain are arranged in the upper panel **31** and the lower panel **33**, and a luminance signal (hereinafter signal **Y**), a chrominance signal (hereinafter signal **C**) and a signal **HH** which is modulated and transmitted through the Fukinuki hole are arranged in the main panel **32**.

### Example 1

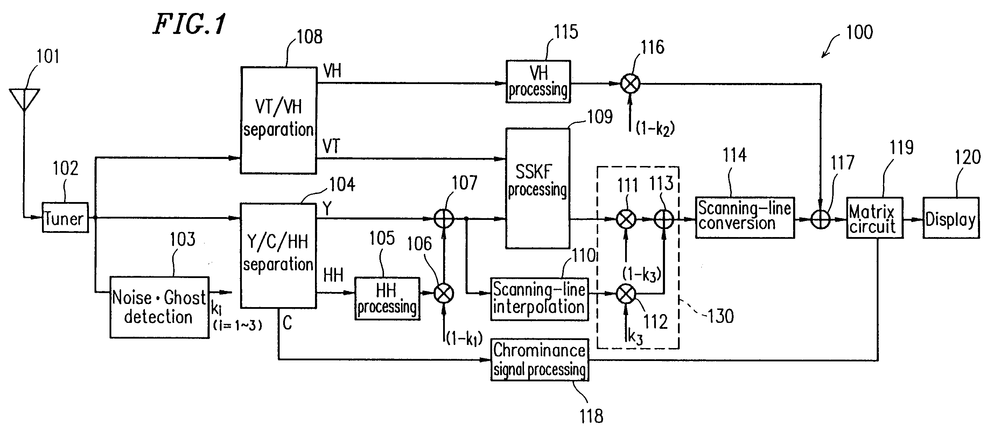

Next, the construction of a television signal processing apparatus **100** in a preferred embodiment of the invention will be described. As shown in Figure **1**, the television signal processing apparatus **100** includes a tuner **102** which receives a television signal transmitted through an antenna **101**, a noise and/or ghost detector **103**, a Y/C/HH separator **104**, a VT/VH separator **108**, an HH processor **105**, a multiplier **106** for controlling the amplitude of an HH signal, an adder **107**, a VH processor **115**, an SSKF (Symmetric Short Kernel Filter) processor **109**, a scanning-line interpolator **110**, a chrominance signal processor **118**, a weighting adder **130**, a scanning-line converter **114**, a multiplier **116** for controlling the amplitude of a VH signal, an adder **117**, a matrix circuit **119**, and a display **120**. The weighting adder **130** includes multipliers **111** and **112**, and an adder **113**. The output of the noise and/or ghost detector **103** is connected to the second inputs of the multipliers **106**, **111**, **112**, and **116**.

In the television signal processing apparatus **100** of Figure **1**, the horizontal-axis expander, various filter circuits, and the like which have been described in conjunction with the conventional signal processing apparatus **300** are omitted. When the television signal processing apparatus of this example is to be actually implemented, these circuits can be appropriately provided as in the conventional signal processing apparatus.

Next, the operation of the television signal processing apparatus **100** will be described with reference to Figure **1**. The tuner **102** selects a signal in a desired channel among signals input through the antenna **101**, and demodulates the selected signal. The output of the tuner **102** is connected to the noise and/or ghost detector **103**, the Y/C/HH separator **104**, and the VT/VH separator **108**.

The noise and/or ghost detector **103** detects noise and ghost included in the wide-screen television signal output from the tuner **102**, and calculates coefficients kᵢ (i = 1 to 3) depending on the detected level, so as to output the calculated coefficients. Herein, the coefficients kᵢ are numerical values in the range of 0 to 1 inclusive, and have larger values as the level of the noise and ghost is increased. The coefficient k₁ is applied to the multiplier **106**, the coefficient k₂ is applied to the multiplier **116**, and the coefficient k₃ is applied to the two multipliers **111** and **112** of the weighting adder **130**. Alternatively, instead of the independent coefficients k₁ to k₃, one common coefficient k can be used.

The Y/C/HH separator **104** extracts a signal for the main panel **32** from the wide-screen television signal output from the tuner **102**, and separates the extracted signal into a signal **Y**, a signal **HH**, and a signal **C**. These signals **Y**, **HH**, and **C** are output from a first output, a second output, and a third output, respectively. The HH processor **105** receives the signal **HH** output from the Y/C/HH separator **104**, and decodes the signal **HH**. The decoded signal **HH** is output to the multiplier **106**. The multiplier **106** multiplies the decoded signal **HH** by a coefficient (1-k₁) based on the coefficient k₁ supplied from the noise and/or ghost detector **103**. As a result, the amplitude (gain) of the signal **HH** is controlled. As is seen from the method for setting the coefficient k₁, the gain of the signal **HH** is reduced as the level of the noise and ghost is increased. The actual value of k₁ for the level of noise and ghost can be determined by simulation and the like. The output of the multiplier **106** is input into the adder **107**.

The adder **107** adds the signal **Y** output from the Y/C/HH separator **104** to the signal **HH** output from the multiplier **106**. The output of the adder **107** is connected to a second input of the SSKF processor **109** and an input of the scanning-line interpolator **110**.

The VT/VH separator **108** extracts signals of the upper and lower panels from the wide-screen television signal output from the tuner **102**, and separates the extracted signals into a signal **VH** and a signal **VT** which are in turn output from a first output and a second output, respectively.

The SSKF processor **109** receives the signal **VT** output from the VT/VH separator **108** and the signal **Y** (lower-frequency component) output from the adder **107**, and performs the processing of SSKF (Symmetric Short Kernel Filter), so as to produce a progressive-scan signal **Y**. The signal **Y** output from the SSKF processor **109** is a signal **Y** reproduced by using a helper signal **VT**. The output of the SSKF processor **109** is connected to the multiplier **111** of the weighting adder **130**.

The scanning-line interpolator **110** performs a scanning-line interpolation for the signal **Y** received from the adder **107**, so as to produce a progressive-scan signal **Y**. The output of the scanning-line interpolator **110** is connected to the multiplier **112** of the weighting adder **130**.

In the weighting adder **130**, the multiplier **111** multiplies the signal **Y** output from the SSKF processor **109** by the coefficient (1-k₃) based on the coefficient k₃ supplied from the noise and/or ghost detector **103**. Similarly, the multiplier **112** multiplies the signal **Y** output from the scanning-line interpolator **110** by the coefficient k₃. As is seen from the method for setting the coefficient k₃, as the level of noise and ghost is increased, the ratio for addition (weight) of the signal **Y** output from the SSKF processor **109** is reduced, and the ratio for addition of the signal **Y** output from the scanning-line interpolator **110** is increased. The actual value of the coefficient k₃ for the level of noise and/or ghost can be determined by simulation and the like, as in the case of k₁. As a result, the ratios of the respective signal **Y** to be added can be controlled. The adder **113** adds the weighted signals **Y** output from the multipliers **111** and **112**, and outputs the added result to the scanning-line converter **114**.

The scanning-line converter **114** converts the number of scanning lines for the received signal **Y** from 360 to 480, and outputs the signal **Y** to the adder **117**.

The VH processor **115** decodes the signal **VH** output from the VT/VH separator **108**, and applies the decoded signal **VH** to the multiplier **116**. The multiplier **116** multiplies the signal **VH** output from the VH processor **115** by a coefficient (1-k₂), based on the coefficient k₂ supplied from the noise and/or ghost detector **103**. As a result, the amplitude (gain) of the signal **VH** is controlled. As is seen from the method for setting the coefficient k₂, the gain of the signal **VH** to be added is decreased, as the level of noise and ghost is increased. The actual value of the coefficient k₂ for the level of noise and/or ghost can be determined by simulation and the like, as in the cases of the coefficients k₁ and k₃. The output of the multiplier **116** is applied to the adder **117**.

The adder **117** adds the signal **Y** output from the scanning-line converter **114** to the signal **VH** output from the multiplier **116**. The output of the adder **117** is applied to the matrix circuit **119**. The chrominance signal processor **118** demodulates the signal **C** output from the Y/C/HH separator **104**, and then outputs the signal **C** to the matrix circuit **119** after converting the number of scanning lines for the signal **C**. The matrix circuit **119** receives the signal **Y** output from the adder **117** and the signal **C** output from the chrominance signal processor **118**, and converts them into red, green, and blue (hereinafter referred to as R, G, and B, respectively) signals for the display. The display **120** receives the R, G, and B signals output from the matrix circuit, so as to perform the display.

As described above, according to the invention, when any noise and ghost is added on the way through the transmission path, the amplitudes of the signals **HH** and **VH** to be added to the main signal are controlled depending on the level of the noise and ghost. Accordingly, it is possible to prevent these signals from causing the image quality to degrade. In addition, as for the signal **VT**, the progressive-scan signal produced by SSKF using the signal **VT** and the progressive-scan signal produced by scanning-line interpolation without using the signal **VT** are added with respective weights depending on the level of the noise and ghost. Accordingly, it is possible to prevent the signal **VT** from causing the image quality to degrade.

### Example 2

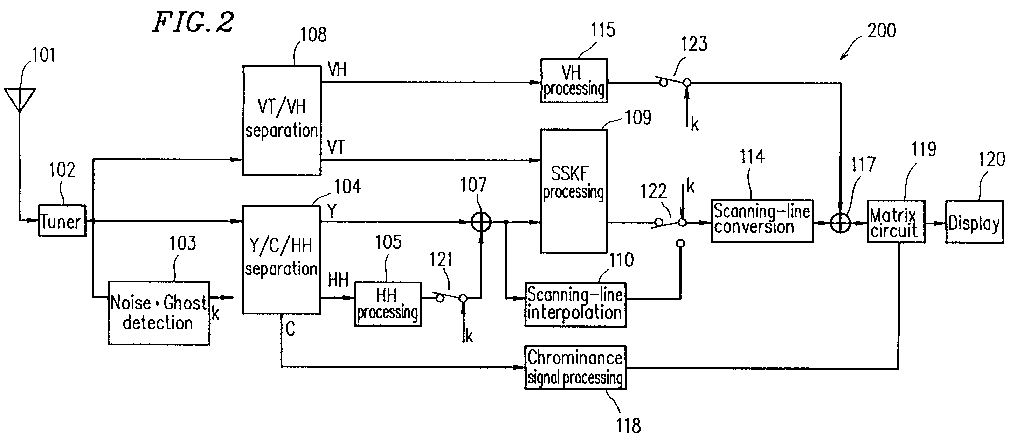

In Example 2, the television signal processing apparatus described in Example 1 uses a common coefficient k as the noise and/or ghost coefficients kᵢ, and the common coefficient k can be set only to 0 or 1. Thus, the construction of the television signal processing apparatus can be simplified. Such a television signal processing apparatus **200** with a simplified construction is shown in Figure **2**. The television signal processing apparatus **200** is different from the television signal processing apparatus **100** shown in Figure **1** in that switches **121** and **123** are substituted for the multipliers **106** and **116**, and a switch **122** is substituted for the weighting adder **130** (the multipliers **111** and **112**, and the adder **113**).

The switches **121** and **123** are closed when the coefficient k is smaller than a certain threshold value, and are opened when the coefficient k is larger than the threshold value. Accordingly, when the level of noise and/or ghost exceeds a certain level, the signal processing is performed without using the helper signals **VH** and **HH**. The switch **122** selects the output from the SSKF processor **109** when the coefficient k is smaller than a certain threshold value, and selects the output from the scanning-line interpolator **110** when the coefficient k is larger than the threshold value. Therefore, if the level of noise and/or ghost exceeds a certain level, the signal that is processed without using the helper signal **VT** is fed to the scanning-line converter **114**.

In the above-described examples, the level of noise and ghost is detected, and then the coefficients kᵢ are determined depending on the detected level. Alternatively, the level of either noise or ghost may be detected and used for the determination of the coefficients kᵢ. Alternatively, an S/N ratio can be used instead of the level of noise or ghost.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A television signal processing apparatus which receives a video signal including: a main signal and a helper signal, and which produces a signal for display based on the main signal and the helper signal, the main signal being arranged in a predetermined portion of a screen having a first aspect ratio and representing a picture having a second aspect ratio, the helper signal being used for improving a quality of picture of the main signal, the television signal processing apparatus comprising:
noise/ghost detection means for detecting a level of at least one of noise and ghost included in the video signal, and for producing at least one control signal based on the detected level;
first signal processing means for receiving the main signal and for producing a first reproduction signal by processing the main signal;
second signal processing means for receiving the main signal and the helper signal, and for producing a second reproduction signal by processing the main signal and the helper signal;
mixing means for receiving the control signal and the first and second reproduction signals, and for adding the first and second reproduction signal with respective weights in accordance with the control signal; and
means for converting an output signal of the mixing means into the signal for display.

2. A television signal processing apparatus according to claim 1, further comprising:
amplitude control means for receiving the helper signal, for changing an amplitude of the helper signal in accordance with the control signal, and for outputting the helper signal having the changed amplitude; and
adding means for adding the helper signal output from the amplitude control means to the output of the mixing means.

3. A television signal processing apparatus according to claim 1 or 2, wherein the video signal includes a second helper signal which is multiplexed on the main signal, and the apparatus further comprises:
means for separating and extracting the main signal and the second helper signal and for outputting the extracted signals;
second amplitude control means for changing an amplitude of the extracted second helper signal in accordance with the control signal and for outputting the second helper signal having the changed amplitude; and
second adding means for adding the extracted main signal and the output signal from the second amplitude control means so as to produce an added signal, and for applying the added signal to the first and the second signal processing means as the main signal.

4. A television signal processing apparatus according to claim 1, 2, or 3, wherein the at least one control signal is at least one coefficient k which is set depending on the detected level, k being 0 ≦ k ≦ 1.

5. A television signal processing apparatus according to claim 1 or 2, wherein the helper signal is a vertical-temporal frequency high signal.

6. A television signal processing apparatus according to claim 1 or 2, wherein the helper signal is a vertical frequency high signal.

7. A television signal processing apparatus according to claim 3, wherein the second helper signal is a horizontal frequency high signal.

8. A television signal processing apparatus according to any one of claims 1 to 7, wherein the first aspect ratio is 4:3, the second aspect ratio is 16:9, and the predetermined portion of the screen is a center portion of the screen.

9. A television signal processing apparatus according to any one of claims 1 to 8, wherein:
the video signal is transmitted as an interlaced-scan signal;
the first and the second signal processing means each has a scanning-line interpolation circuit; and
the first and the second reproduction signals are output from the first and the second signal processing means as progressive-scan signals.

10. A television signal processing method comprising the steps of receiving a video signal including a main signal and a helper signal and producing a signal for display based on the main signal, the main signal being arranged in a predetermined portion of a screen having a first aspect ratio and representing a picture having a second aspect ratio, and the helper signal being used for improving a quality of picture of the main signal, the television signal processing method further comprising the steps of:
detecting a level of at least one of noise and ghost included in the video signal, and producing at least one control signal based on the detected level;
processing the main signal to produce a first reproduction signal;
processing both the main signal and the helper signal to produce a second reproduction signal;
producing a mixed signal by adding the first and second reproduction signal with respective weights in accordance with the control signal; and
converting the mixed signal into the signal for display.

11. A television signal processing method according to claim 10, further comprising the steps of:
changing an amplitude of the helper signal in accordance with the control signal; and
adding the helper signal having the changed amplitude to the mixed signal.

12. A television signal processing method according to claim 10 or 11, wherein the video signal includes a second helper signal which is multiplexed on the main signal, the method further comprising the steps of:
separating and extracting the main signal and the second helper signal and outputting the extracted signals;
changing an amplitude of the extracted second helper signal in accordance with the control signal; and
producing an added signal by adding the extracted main signal and the second helper signal having the changed amplitude, and applying the added signal as the main signal for the first and the second signal processing steps.

13. A television signal processing method according to claim 10, 11, or 12, wherein the at least one control signal is at least one coefficient k which is set depending on the detected level, k being 0 ≦ k ≦ 1.

14. A television signal processing method according to claim 10 or 11, wherein the helper signal is a vertical-temporal frequency high signal.

15. A television signal processing method according to claim 10 or 11, wherein the helper signal is a vertical frequency high signal.

16. A television signal processing method according to claim 12, wherein the second helper signal is a horizontal frequency high signal.

17. A television signal processing method according to any one of claims 10 to 16, wherein the first aspect ratio is 4:3, the second aspect ratio is 16:9, and the predetermined portion of the screen is a center portion of the screen.

18. A television signal processing method according to any one of claims 10 to 17, wherein:
the video signal is transmitted as an interlaced-scan signal;
the step of processing the main signal comprises the steps of performing a scanning-line interpolation and converting the first reproduction signal into a progressive-scan signal; and
the step of processing both the main signal and the helper signal comprises the steps of performing a scanning-line interpolation and converting the second reproduction signal into a progressive-scan signal.
